# EUROPÄISCHE PATENTSCHRIFT

(11) **EP 3 981 726 B1**
(45) Veröffentlichungstag und Bekanntmachung des Hinweises auf die Patenterteilung: **17.04.2024**
(21) Anmeldenummer: 21200714.0
(22) Anmeldetag: 04.10.2021
(51) Int. Cl.: B66C 1/58, B66C 3/20, E02F 3/413

(54) **VERSCHWENKVORRICHTUNG, GREIFSYSTEM SOWIE KRAN**
PIVOTING DEVICE, GRIPPING SYSTEM AND CRANE
DISPOSITIF PIVOTANT, SYSTÈME DE PRÉHENSION, AINSI QUE GRUE

(30) Priorität: 06.10.2020 DE 102020126144
(43) Veröffentlichungstag der Anmeldung: 13.04.2022
(73) Patentinhaber: LASCO Heutechnik GmbH, 4891 Pöndorf (AT)
(72) Erfinder: Landrichinger, Johannes, 4891 Pöndorf (AT); Landrichinger, Werner, 4891 Pöndorf (AT)
(74) Vertreter: Heyerhoff Geiger GmbH & Co. KG

(56) Entgegenhaltungen:
- CN-A- 109 607 395
- DE-A1- 10 025 596
- DE-U- 7 233 984
- US-A- 3 920 137

## Beschreibung

Die vorliegende Erfindung betrifft eine Verschwenkvorrichtung, ein Greifsystem für einen Kran, insbesondere einen Heukran, sowie einen Kran, insbesondere einen Heukran, mit einem solchen Greifsystem.

Landwirtschaftliches Fasergut wie Heu, Stroh und/oder dergleichen wird üblicherweise vor seiner Weiterverwendung, gegebenenfalls auch zur Verarbeitung etwa durch Trocknung, in Lagerstätten, zum Beispiel Hallen bzw. Scheunen, gelagert. Zum Befüllen der Lagerstätten, aber auch zum Umschichten solchen Faserguts in den Lagerstätten, sind Kräne mit Greifvorrichtungen bekannt. Diese Kräne sind in der Regel als zum Beispiel am Hallendach angebrachte, gegebenenfalls motorisch bewegbare Hängekräne ausgebildet.

Aus US 3 920 137 A ist eine Kombination aus Baggerlöffelstiel und Zweischalengreifer bekannt. Der Zweischalengreifer ist an einer Schalenstütze gelagert, welche von zwei beabstandeten Seitenplatten gebildet wird und schwenkbar am Baggerlöffelstiel befestigt ist. Zwei schwenkbare Verbinder verbinden einen Hydraulikzylinder mit dem Baggerlöffelstiel einerseits und der Schalenstütze andererseits. Dieses Dokument offenbart den Oberbegriff von Anspruch 1.

DE 100 25 596 A1 betrifft eine Anbauvorrichtung mit einem Schaufelpaar, das an einem Ausleger um mindestens eine Schwenkachse schwenkbar angeordnet ist. Beabstandet von einem freien Ende des Auslegers ist ein L-förmiges Hebelpaar angelenkt. An dem anderen Ende des jeweiligen Hebels ist jeweils ein gerader Hebel angelenkt, dessen anderes Ende wiederum etwa mittig an je einem von zwei Schenkeln eines Schaufelträgers angelenkt ist.

In DE 72 33 984 U ist ein hydraulisch betätigter und an einem Kran montierter Greifer beschrieben, der um eine normal zur Längsachse des Kranauslegers verlaufende horizontale Achse schwenkbar ist. Die Schwenkachse ist hierbei direkt durch eine starre Greiferarme miteinander verbindende Brücke geführt, an der eine die Schwenkbewegung auslösende Hydraulikpresse angreift.

Es ist eine Aufgabe der vorliegenden Erfindung, das Greifen von landwirtschaftlichen Erzeugnissen zu verbessern, insbesondere die Betriebssicherheit zu erhöhen und/oder ein flexibles Greifen zu ermöglichen.

Diese Aufgabe wird gelöst durch eine Verschwenkvorrichtung, ein Greifsystem für einen Kran, insbesondere einen Heukran, sowie einen Kran, insbesondere einen Heukran, mit einem solchen Greifsystem gemäß den unabhängigen Ansprüchen.

Eine Verschwenkvorrichtung für einen Kran, insbesondere einen Heukran, gemäß einem ersten Aspekt der Erfindung weist ein Kranarmteil, insbesondere zur Befestigung an einem Kranarm, ein Greifvorrichtungsteil, insbesondere zur Befestigung an einer Greifvorrichtung, und eine Verschwenkvorrichtung auf, mit welcher das Greifvorrichtungsteil relativ zum Kranarmteil schwenkbar gelagert ist. Die Verschwenkvorrichtung weist einen Übersetzungsmechanismus zum Verschwenken des Greifvorrichtungsteils relativ zum Kranarmteil auf.

Ein Übersetzungsmechanismus im Sinne der Erfindung ist insbesondere ein Mechanismus, mit dem eine Eingangsbewegung in eine von der Eingangsbewegung verschiedene Ausgangsbewegung umwandelbar ist. Beispielsweise kann die Eingangsbewegung mithilfe des Übersetzungsmechanismus in eine gegenüber der Eingangsbewegung schnellere oder langsamere Ausgangsbewegung umgewandelt werden. Ebenso kann die Eingangsbewegung mithilfe des Übersetzungsmechanismus in eine gegenüber der Eingangsbewegung stärkere oder schwächere Ausgangsbewegung umgewandelt werden. Anders gesagt lässt sich mithilfe des Übersetzungsmechanismus eine Eingangskraft und/oder ein Eingangsmoment in eine größere oder kleinere Ausgangskraft bzw. ein größeres oder kleineres Ausgangsmoment transformieren. Der Übersetzungsmechanismus weist dabei vorzugsweise ein Übersetzungsverhältnis auf, welches zum Beispiel das Verhältnis von Eingangskraft oder -moment zur Ausgangskraft bzw. zum Ausgangsmoment angibt.

Wenn im Folgenden im Hinblick auf den Übersetzungsmechanismus, insbesondere auf seine Wirkung, auf eine Kraft Bezug genommen wird, soll dies auch für ein entsprechendes, zum Beispiel durch die Kraft vermitteltes Moment gelten.

Ein Aspekt der Erfindung basiert auf dem Ansatz, eine Übersetzung vorzusehen, um eine Greifvorrichtung zum Greifen von landwirtschaftlichem Fasergut, zum Beispiel losem Heu oder Stroh oder Heu- bzw. Strohballen, leichter und/oder stärker relativ zu einem Kranarm verschwenken zu können. Zweckmäßigerweise ist deshalb ein Übersetzungsmechanismus vorgesehen, der dazu eingerichtet ist, eine Verschwenkvorrichtung zum Verschwenken eines an der Greifvorrichtung befestigbaren Greifvorrichtungsteils relativ zu einem am Kranarm befestigbaren Kranarmteil zu betätigen. Mithilfe des Übersetzungsmechanismus lässt sich sicherstellen, dass das Verschwenken des Greifvorrichtungsteils relativ zum Kranarmteil durch eine sehr gleichmäßige bzw. konstante Kraft erfolgen kann. Dadurch kann die Greifvorrichtung sehr sicher verschwenkt werden. Gleichzeitig lassen sich so aber auch große Verschwenkwinkel realisieren.

Beispielsweise kann der Übersetzungsmechanismus derart an der Verschwenkvorrichtung montiert bzw. in der Verschwenkvorrichtung verbaut sein, dass unter Aufwendung einer im Wesentlichen kontinuierlichen Kraft zur Betätigung des Übersetzungsmechanismus ein Verschwenken des Greifvorrichtungsteils relativ zum Kranarmteil um wenigstens 90°, vorzugsweise um wenigstens 120°, insbesondere um etwa 135°, erreichbar ist. Dadurch kann zum Beispiel bereits mit einem einzigen Hydraulikzylinder unter moderater Belastung etwa ein von einer am Greifvorrichtungsteil befestigten Greifvorrichtung gegriffener Heu- oder Strohballen, insbesondere Rundballen, problemlos in eine gewünschten Orientierung verschwenkt und zum Beispiel gestapelt werden.

Mithilfe des Greifvorrichtungsteils und des Tragarmteils kann eine Greifvorrichtung unmittelbar an einem Tragarm eines Krans oder Baggers angeordnet sein oder werden. Es ist nicht notwendig, dass weitere Bauteile oder -gruppen zischen Greifvorrichtung und Kranarm angeordnet werden.

Nachfolgend werden bevorzugte Ausführungsformen der Erfindung und deren Weiterbildungen beschrieben, die jeweils, soweit dies nicht ausdrücklich ausgeschlossen wird, beliebig miteinander sowie mit den im Weiteren beschriebenen Aspekten der Erfindung kombiniert werden können.

In einer bevorzugten Ausführungsform weist der Übersetzungsmechanismus ein variables Übersetzungsverhältnis auf. Beispielsweise kann der Übersetzungsmechanismus derart ausgebildet sein, dass sich das Übersetzungsverhältnis bei der Betätigung des Übersetzungsmechanismus ändert. Beispielsweise kann sich die auf die Greifvorrichtung wirkende Ausgangskraft relativ zur Eingangskraft, welche etwa zur Betätigung des Übersetzungsmechanismus aufgewendet wird, bei zunehmendem Verschwenken der Greifvorrichtung relativ zum Kranarm ändern. Dadurch lässt sich die Verschwenkvorrichtung besonders gut an auszuführende Arbeits- bzw. Greifvorgänge anpassen. D. h., dass ein entsprechendes Greifsystem besonders effizient betreibbar ist bzw. zu greifendes landwirtschaftliches Fasergut besonders effizient verräumen kann.

Zweckmäßigerweise ist der Übersetzungsmechanismus dabei derart eingerichtet, dass sich die Ausgangskraft relativ zu Eingangskraft bei zunehmendem Verschwenken des Greifvorrichtungsteils relativ zum Kranarmteil, insbesondere aus einer angewinkelten Lage in eine ausgestreckte Lage, vergrößert. Dadurch kann zum Beispiel das Verschwenken des Greifvorrichtungsteils aus der angewinkelten Lage in die ausgestreckte Lage erleichtert, insbesondere bei konstanter Eingangskraft ermöglicht werden.

Ebenso kann sich bei einem variablen Übersetzungsverhältnis ein zur Betätigung des Übersetzungsmechanismus ausgeführter Eingangshub relativ zu einem von dem Greifvorrichtungsteil ausgeführten Ausgangshub während dem Verschwenken des Greifvorrichtungsteils relativ zum Kranarmteil ändern. Zweckmäßigerweise ist der Übersetzungsmechanismus dabei derart eingerichtet, dass sich der Ausgangshub relativ zum Eingangshub bei zunehmendem Verschwenken des Greifvorrichtungsteils relativ zum Kranarmteil, insbesondere aus einer angewinkelten Lage in eine ausgestreckte Lage, verkleinert. Dadurch können gegebenenfalls öfter auszuführende Verschwenkbewegungen, in denen das Greifvorrichtungsteil im Wesentlichen ausgestreckt ausgerichtet bleibt, zum Beispiel zum Greifen von auf dem Boden liegenden Heu- oder Strohballen mithilfe einer Greifvorrichtung, schneller durchgeführt werden als Verschwenkbewegungen aus der angewinkelten Lage, in welche die Greifvorrichtung zum Beispiel zum Stapeln von Ballen gebracht werden kann.

Eine angewinkelte Lage des Greifvorrichtungsteils ist hierbei insbesondere eine Lage, in welcher das Greifvorrichtungsteil im Wesentlichen seitlich bzw. parallel zum Kranarmteil angeordnet ist und so zum Beispiel Objekte, die seitlich bzw. parallel zu einem am Kranarmteil befestigten Kranarm angeordnet sind, mithilfe einer am Greifvorrichtungsteil befestigten Greifvorrichtung greifbar sind. Mit anderen Worten ist eine angewinkelte Lage eine Lage, in der das Greifvorrichtungsteil im Wesentlichen am Kranarmteil anliegt.

Eine ausgestreckte Lage des Greifvorrichtungsteils ist hierbei insbesondere eine Lage, in welcher das Greifvorrichtungsteil im Wesentlichen vor dem Kranarmteil, d. h. in einer Verlängerung des am Kranarmteil befestigten Kranarms, angeordnet ist und so zum Beispiel Objekte, die sich vor dem Kranarm bzw. in der Verlängerung des Kranarms befinden, greifbar sind. Mit anderen Worten ist eine ausgestreckte Lage eine Lage, in der das Greifvorrichtungsteil nicht am Kranarmteil anliegt, insbesondere dazu angewinkelt ist.

In einer bevorzugten Ausführungsform weist der Übersetzungsmechanismus ein Koppelgetriebe, insbesondere ein Viergelenkgetriebe, auf. Das Koppelgetriebe ist dabei vorzugsweise derart ausgebildet, dass das Greifvorrichtungsteil bei der Betätigung einer Koppel des Koppelgetriebes mit einer im Wesentlichen gleichmäßigen bzw. kontinuierlichen Kraft über einen gesamten Verschwenkbereich, zum Beispiel um wenigstens 120°, insbesondere um etwa 135°, verschwenkbar ist. Mithilfe des Koppelgetriebes können so Überlastungen bei der Betätigung der Verschwenkvorrichtung, zum Beispiel eines zur Betätigung eingesetzten Hydraulikzylinders, vermieden oder zumindest das Risiko solcher Überlastungen verringert werden.

In einer weiteren bevorzugten Ausführungsform weist die Verschwenkvorrichtung ein erstes Schwenklager auf, an welchem das Greifvorrichtungsteil mit dem Kranarmteil verbunden ist. Zweckmäßigerweise ist das Greifvorrichtungsteil dabei mithilfe des Übersetzungsmechanismus relativ zum Kranarmteil am ersten Schwenklager verschwenkbar. Mit anderen Worten ist der Übersetzungsmechanismus zweckmäßigerweise dazu eingerichtet, das Greifvorrichtungsteil relativ zum Kranarmteil um das erste Schwenklager herum zu verschwenken. Durch das Kranarmteil und das Greifvorrichtungsteil kann der Verschwenkvorrichtung die notwendige Stabilität und Robustheit verliehen werden. Insbesondere können dem Übersetzungsmechanismus durch das Kranarmteil und das Greifvorrichtungsteil wohldefinierte Angriffspunkte für eine Hebelwirkung, insbesondere ein variables Übersetzungsverhältnis, bereitgestellt werden.

Weiter vorzugsweise weist der Übersetzungsmechanismus einen Hebelarm auf und ist dazu eingerichtet, eine auf den Hebelarm wirkende Eingangskraft in eine von der Eingangskraft verschiedene, auf das Greifvorrichtungsteil wirkende Ausgangskraft zu übersetzen. Dabei kann der Hebelarm insbesondere eine Schwinge des Koppelgetriebes bilden. Zweckmäßigerweise bildet das Kranarmteil dabei die Basis bzw. das Gerüst des Koppelgetriebes und das Greifvorrichtungsteil eine weitere Schwinge. Dadurch ist es möglich, bei konstanter Eingangskraft ein kontrolliertes Verschwenken der Greifvorrichtung über den gesamten Verschwenkbereich durchzuführen.

Vorzugsweise ist der Übersetzungsmechanismus zwischen dem Kranarmteil und dem Greifvorrichtungsteil angeordnet. Insbesondere kann das Kranarmteil und/oder das Greifvorrichtungsteil den Übersetzungsmechanismus zumindest abschnittsweise umgeben. Die Verschwenkvorrichtung kann so besonders kompakt ausgeführt sein. Zudem lässt sich der Übersetzungsmechanismus dadurch schützen.

In einer weiteren bevorzugten Ausführungsform ist der Übersetzungsmechanismus zur Kopplung an ein Betätigungselement zur Betätigung des Übersetzungsmechanismus eingerichtet, und zwar vorzugsweise derart, dass mithilfe des Betätigungselements die Eingangskraft auf den Übersetzungsmechanismus, insbesondere auf den Hebelarm, ausübbar ist. Der Übersetungsmechanimus kann insbesondere derart ausgebildet sein, dass das Betätigungselement über den am Kranarmteil durch ein zweites Schwenklager verschwenkbar gelagerten Hebelarm mit dem Kranarmteil verbindbar ist. Zudem ist das Betätigungselement vorzugsweise über ein am Greifvorrichtungsteil durch ein drittes Schwenklager verschwenkbar gelagertes Übersetzungselement mit dem Greifvorrichtungsteil verbindbar. Das Übersetzungselement kann dabei eine Koppel des Koppelgetriebes bilden. Vorzugsweise ist das Übersetzungselement dazu eingerichtet, die vom Betätigungselement auf den Hebelarm ausgeübte Eingangskraft auf das Greifvorrichtungsteil zu übertragen. Dadurch kann ein, insbesondere variables, Übersetzungsverhältnis auf konstruktiv einfache und zuverlässige Weise realisiert werden.

In einer weiteren bevorzugten Ausführungsform sind der Hebelarm und das Übersetzungselement an einem Verbindungslager zueinander verschwenkbar gelagert. Vorzugsweise ist der Übersetzungsmechanismus am Verbindungslager zur Kopplung an das Betätigungselement eingerichtet. Dadurch kann die Verschwenkvorrichtung besonders kompakt bauen. Insbesondere kann so das Betätigungselement die Eingangskraft unmittelbar auf das Übersetzungselement - die Koppel - übertragen, wodurch die Verschwenkvorrichtung besonders effizient arbeiten kann.

Insbesondere kann der Übesetzungsmechanimus an einem Gelenkpunkt des Koppelgetriebes, insbesondere an einem Verbindungslager zwischen Schwinge und Koppel, an das Betätigungselement gekoppelt oder koppelbar sein.

In einer weiteren bevorzugten Ausführungsform ist ein Abstand zwischen dem ersten und dritten Schwenklager kleiner als ein Abstand zwischen dem zweiten Schwenklager und einem Verbindungslager zur Verbindung von Betätigungselement und Hebelarm. Dadurch lässt sich eine kleine Eingangskraft in eine große Ausgangskraft übersetzen. Insbesondere kann so erreicht werden, dass eine konstante Eingangskraft mit zunehmendem Verschwenken des Greifvorrichtungsteils relativ zum Kranarmteil in eine immer größere Ausgangskraft übersetzt wird.

Vorzugsweise beträgt dabei ein Abstandsverhältnis des Abstands zwischen dem ersten und dritten Schwenklager zum Abstand zwischen dem zweiten Schwenklager und dem Verbindungslager im Wesentlichen 2/3. "Im Wesentlichen" bedeutet hierbei eine Unsicherheit von höchstens 10 %, vorzugsweise höchstens 5 %, insbesondere höchstens als 2 %. Anders gesagt bedeutet "im Wesentlichen 2/3" hierbei, dass das Abstandsverhältnis nicht mehr als 0,1, insbesondere nicht mehr als 0,05, insbesondere nicht mehr als 0,02, vom Wert 2/3 abweicht. Es hat sich gezeigt, dass sich durch dieses Abstandsverhältnis besonders günstige, d. h. besonders effiziente, Übersetzungsverhältnisse realisieren lassen, mit denen bei konstruktiv vertretbarem Hub des Betätigungselements ein ausreichender Verschwenkbereich realisierbar ist. Insbesondere bietet dieses Abstandsverhältnis eine für das Greifen und Verschwenken von Fasergut, insbesondere von Heu- oder Strohballen, günstige Zunahme der Ausgangskraft mit zunehmendem Verschwenken des Greifvorrichtungsteils aus der angewinkelten Lage in die ausgestreckte Lage.

In einer weiteren bevorzugten Ausführungsform ist das erste Schwenklager unterbrochen ausgebildet. Zum Beispiel kann das erste Schwenklager zwei koaxial angeordnete, voneinander beabstandete Lagerteile aufweisen. Dadurch kann ein Bauteil durch eine vom ersten Schwenklager definierte Achse hindurchschwenken. Der Verschwenkbereich der Verschwenkvorrichtung lässt sich so maßgeblich erweitern.

In einer weiteren bevorzugten Ausführungsform sind das erste und zweite Schwenklager derart am Kranarmteil angeordnet, dass mit dem Hebelarm bei Betätigung des Übersetzungsmechanismus ein Winkelbereich überstreichbar ist, durch den eine vom ersten Schwenklager definierte Schwenkachse verläuft. Dabei ist das erste Schwenklager vorzugsweise derart ausgebildet, dass es eine Schwenkbewegung des Hebelarms nicht blockiert, d. h. dass sich der Hebelarm am ersten Schwenklager ungehindert vorbeibewegen kann. Dadurch kann sichergestellt werden, dass eine durch das Betätigungselement ausgeübte Eingangskraft zur Betätigung des Übersetzungsmechanismus im Wesentlichen senkrecht auf den Hebelarm einwirken kann, und zwar über den gesamten Verschwenkbereich von beispielsweise mehr als 90°, vorzugsweise mehr als 120°, insbesondere etwa 135°. So lässt sich eine günstige Kraftübertragung erreichen. Zudem kann so auch ein besonders großer Verschwenkbereich ermöglicht werden.

In einer weiteren bevorzugten Ausführungsform ist das Kranarmteil zumindest abschnittsweise doppelwandig ausgebildet. Vorzugsweise weist das erste Schwenklager zwei Lagerteile auf, die jeweils zwischen einer äußeren Seitenwand und einer inneren Seitenwand des Kranarmteils angeordnet sind. Dadurch kann ein Durchschwenken des Hebelarms durch die vom ersten Schwenklager definierte Schwenkachse ermöglicht werden.

In einer weiteren bevorzugten Ausführungsform ist der Übersetzungsmechanismus mithilfe eines Hydraulikzylinders betätigbar. Der Hydraulikzylinder ist dabei vorzugsweise zumindest teilweise im Kranarm angeordnet. Dadurch kann der Hydraulikzylinder einerseits geschützt werden. Andererseits lässt sich das Kreissystem so auch besonders kompakt realisieren.

Erfindungsgemäß weist das Greifvorrichtungsteil eine Schwinge und ein relativ zur Schwinge verschwenkbar gelagertes Gerüst auf. Die Schwinge ist dabei vorzugsweise Teil des Übersetzungsmechanismus, insbesondere des Koppelgetriebes. Die Schwinge kann insbesondere eine Schwinge des Koppelgetriebes sein. Das Gerüst kann dagegen einen "Kopf" der Verschwenkvorrichtung bilden und ist zur Verbindung mit der Greifvorrichtung ausgebildet. Durch das Aufteilen des Greifvorrichtungsteils in grundsätzlich gegeneinander verschwenkbare Bauteile bzw. -gruppen kann die Greifvorrichtung bei einer Bewegung des Kranarms, insbesondere einer Verschwenkung des Kranarms, alleine durch die Schwerkraft in einer horizontalen Ausrichtung, in der sich die Greifvorrichtung in einer senkrechten Ebene öffnen und schließen kann und Fasergut damit von oben greifbar ist, gehalten werden, ohne dass die Verschwenkvorrichtung aktiv betätigt werden muss. Mit anderen Worten kann die Greifvorrichtung relativ zum Kranarm frei verschwenkbar sein. Die Verschwenkvorrichtung kann somit in einem entsprechenden "freien" Betriebsmodus betrieben werden, in dem der Übersetzungsmechanismus von der Verschwenkung des Gerüsts, insbesondere der daran gekoppelten Greifvorrichtung, relativ zum Kranarmteil entkoppelt ist.

Das Gerüst ist dabei verschwenkfest mit der Greifvorrichtung verbunden, etwa durch direktes Anflanschen der Greifvorrichtung an das Gerüst oder unmittelbar bzw. indirekt über einen Drehkranz zum Rotieren der Greifvorrichtung relativ zum Gerüst und damit auch zum Kranarm. Hierbei ist unter "verschwenkfest" also keineswegs eine fixe Verbindung bzw. Befestigung zu verstehen, sondern lediglich eine Unterbindung von Schwenkbewegungen, d. h. Bewegungen um eine parallel zur Verbindungsebene zwischen Gerüst und Greifvorrichtung ausgerichtete Achse.

Erfindungsgemäß ist das Gerüst an der Schwinge festlegbar, zum Beispiel mithilfe eines Bolzens. Dadurch kann das freie Verschwenken des Gerüsts relativ zur Schwinge unterbunden werden. Insbesondere kann bei Festlegung des Gerüsts an der Schwinge die Verschwenkvorrichtung in einem "gekoppelten" Betriebsmodus betrieben werden, in dem eine Verschwenkung des Gerüsts, insbesondere der Greifvorrichtung, relativ zum Kranarmteil nicht vom Übersetzungsmechanismus entkoppelt ist.

Ein Greifsystem für einen Kran, insbesondere Heukran, gemäß einem zweiten Aspekt der Erfindung weist einen Kranarm, eine Greifvorrichtung und eine Verschwenkvorrichtung gemäß dem ersten Aspekt der Erfindung auf. Die Greifvorrichtung ist dabei mithilfe der Verschwenkvorrichtung relativ zum Kranarm verschwenkbar gelagert.

Ein Kran, insbesondere Heukran, gemäß einem dritten Aspekt der Erfindung weist ein Greifsystem gemäß dem zweiten Aspekt der Erfindung auf. Der Kran kann beispielsweise als ein in einer Scheune montierter, entlang von Schienen beweglicher Hängekran ausgebildet sein.

Im Weiteren wird die Erfindung anhand von Figuren näher erläutert. Soweit zweckdienlich, sind hierin gleich wirkende Elemente mit gleichen Bezugszeichen versehen. Die Erfindung ist nicht auf die in den Figuren dargestellten Ausführungsbeispiele beschränkt - auch nicht in Bezug auf funktionale Merkmale. Die bisherige Beschreibung wie auch die nachfolgende Figurenbeschreibung enthalten zahlreiche Merkmale, die in den abhängigen Unteransprüchen teilweise zu mehreren zusammengefasst wiedergegeben sind. Diese Merkmale wie auch alle übrigen oben und in der nachfolgenden Figurenbeschreibung offenbarten Merkmale wird der Fachmann jedoch auch einzeln betrachten und zu sinnvollen weiteren Kombinationen zusammenfügen. Insbesondere sind alle genannten Merkmale jeweils einzeln und in beliebiger geeigneter Kombination mit der Verschwenkvorrichtung gemäß dem ersten Aspekt der Erfindung, dem Greifsystem gemäß dem zweiten Aspekt der Erfindung und dem Kran gemäß dem dritten Aspekt der Erfindung kombinierbar.

Es zeigen, zumindest teilweise schematisch:
- Fig. 1: ein Beispiel eines Greifsystems für einen Kran in einer Seitenansicht;
- Fig. 2: ein Beispiel einer Verschwenkvorrichtung mit einem Übersetzungsmechanismus; und
- Fig. 3: ein Beispiel der Verschwenkvorrichtung aus dem Greifsystem aus Fig. 1 in einer Detailansicht aus einer anderen Perspektive.

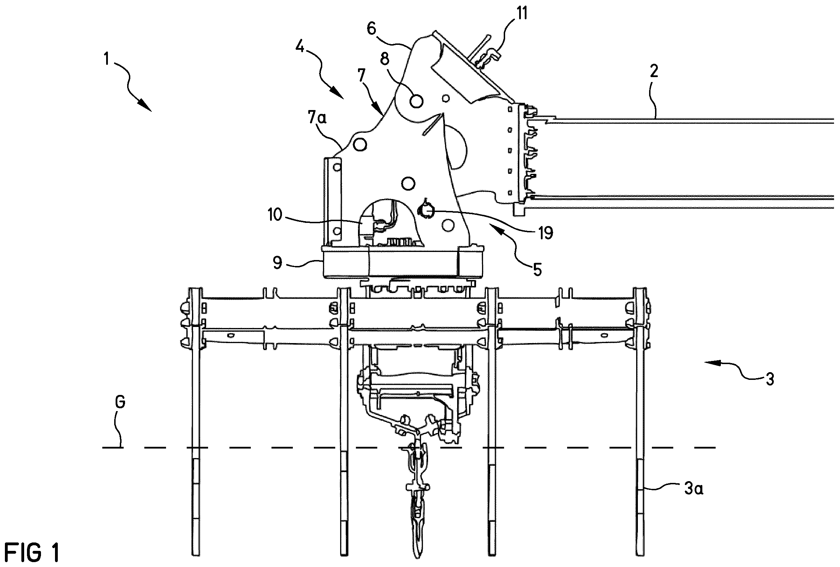

**Figur 1** zeigt ein Beispiel eines Greifsystems 1 für einen Kran, insbesondere einen Heukran, in einer Seitenansicht. Das Greifsystem 1 umfasst einen Kranarm 2, eine Greifvorrichtung 3 und eine Verschwenkvorrichtung 4, mit der die Greifvorrichtung 3 relativ zum Kranarm 2 verschwenkbar gelagert ist. Dabei weist die Verschwenkvorrichtung 4 einen Übersetzungsmechanismus 5 zum Verschwenken der Greifvorrichtung 3 relativ zum Kranarm 2 auf.

Die Verschwenkvorrichtung 4 weist ein mit dem Kranarm 2 verbundenes Kranarmteil 6 und ein mit der Greifvorrichtung 3 verbundenes Greifvorrichtungsteil 7 auf. Das Kranarmteil 6 und das Greifvorrichtungsteil 7 sind über ein erstes Schwenklager 8 verschwenkbar miteinander verbunden, sodass die Greifvorrichtung 3 aus der in Figur 1 gezeigten angewinkelten Lage in eine dazu im Wesentlichen um 90° gedrehte ausgestreckte Lage verschwenkbar ist.

Die angewinkelte Lage der Greifvorrichtung 3 ist dabei vorzugsweise dadurch definiert, das eine Greifachse G der Greifvorrichtung 3 im Wesentlichen parallel zum Kranarm 2 verläuft. Die Greifachse G ist diejenige Achse, um die sich die Greifvorrichtung 3, insbesondere Greifer 3a der Greifvorrichtung 3, schließbar sind. In der angewinkelten Lage ist die Verschwenkvorrichtung 4 entsprechend angezogen, d. h. das Kranarmteil 6 und das Greifvorrichtungsteil 7 bilden eine kompakte Struktur. Anders gesagt verläuft der Kranarm 2 in der angewinkelten Lage im Wesentlichen senkrecht zu einer Greifebene (nicht eingezeichnet), die durch die Öffnungs- oder Schließbewegung der Greifvorrichtung 3, insbesondere der Greifer 3a, definiert ist.

Die ausgestreckte Lage der Greifvorrichtung 3 ist vorzugsweise entsprechend dadurch definiert, dass die Greifachse G im Wesentlichen senkrecht zum Kranarm 2 verläuft. In der ausgestreckten Lage ist die Verschwenkvorrichtung 4 entsprechend gestreckt, d. h. das Kranarmteil 6 und das Greifvorrichtungsteil 7 bilden eine ausladende Struktur. Anders gesagt verläuft der Kranarm 2 in der vertikalen Lage im Wesentlichen parallel zur Greifebene.

Die Verbindung zwischen dem Kranarmteil 6 und dem Kranarm 2 ist vorzugsweise eine direkte Verbindung, d. h. das Kranarmteil 6 ist unmittelbar mit dem Kranarm 2 verbunden. Das Kranarmteil 6 kann zum Beispiel am Kranarm 2 befestigt bzw. montiert sein. Im gezeigten Beispiel ist das Kranarmteil 6 am Kranarm 2 angeflanscht.

Die Verbindung zwischen dem Greifvorrichtungsteil 7 und der Greifvorrichtung 3 ist vorzugsweise eine indirekte Verbindung, d. h. das Greifvorrichtungsteil 7 ist mittelbar mit der Greifvorrichtung 3 verbunden. Das Greifvorrichtungsteil 7 kann zum Beispiel über ein weiteres Bauteil oder eine Baugruppe mit der Greifvorrichtung 3 verbunden sein. Im gezeigten Beispiel ist das Greifvorrichtungsteil 7 mit der Greifvorrichtung 3 über einen Drehkranz verbunden, mit dessen Hilfe die Greifvorrichtung 3 relativ zum Greifvorrichtungsteil 7, insbesondere zur gesamten Verschwenkvorrichtung 4 und damit auch zum Kranarm 2, rotierbar ist. Der Drehkranz ist in Figur 1 nicht sichtbar, sondern in einem Gehäuse 9 angeordnet.

Die Verschwenkvorrichtung 4, insbesondere das Greifvorrichtungsteil 7, ist vorzugsweise gerüstartig ausgebildet. D. h., dass die Verschwenkvorrichtung 4, insbesondere das Greifvorrichtungsteil 7, dazu eingerichtet sein kann, weitere Komponenten des Greifsystems 1 zu tragen bzw. abzustützen. Insbesondere kann die Verschwenkvorrichtung 4, insbesondere das Greifvorrichtungsteil 7, diese weiteren Komponenten zumindest teilweise einhausen.

Dabei weist das Greifvorrichtungsteil 7 vorzugsweise eine (in Figur 1 nicht sichtbare) Schwinge und ein relativ zur Schwinge, insbesondere über das erste Schwenklager 8, verschwenkbar gelagertes Gerüst 7a auf. Zur Verschwenkung der Greifvorrichtung 3 durch den Übersetzungsmechanismus 5 ist das Gerüst 7a jedoch mithilfe eines Bolzens 19 an der Schwinge festgelegt. Durch Lösen der Festlegung, d. h. Herausziehen des Bolzens 19, kann die Greifvorrichtung 3 jedoch vom Übersetzungsmechanismus 5 entkoppelt werden, so dass die Greifvorrichtung 3 am Kranarm 2 pendeln bzw. sich aufgrund der Schwerkraft horizontal ausrichten kann. Eine horizontale Ausrichtung entspricht hierbei einer horizontalen Ausrichtung der Greifachse G.

Im in Figur 1 gezeigten Beispiel ist am Gerüst 7a ein Antrieb 10 zum Antreiben des Drehkranzes im Gehäuse 9 sowie der Drehkranz selber angebracht.

Des Weiteren ist wenigstens eine Hydraulikkupplung 11 am Kranarmteil 6 angebracht. Mithilfe der Hydraulikkopplung 11 kann eine am Kranarm 2 entlanggeführte Hydraulikleitung (nicht gezeigt) mit einer Hydraulikleitung zur Versorgung des zum Beispiel als Hydraulikmotor ausgebildeten Antriebs 10 und/oder der Greifvorrichtung 3 innerhalb der Verschwenkvorrichtung 4 flüssigleitend verbunden sein bzw. werden.

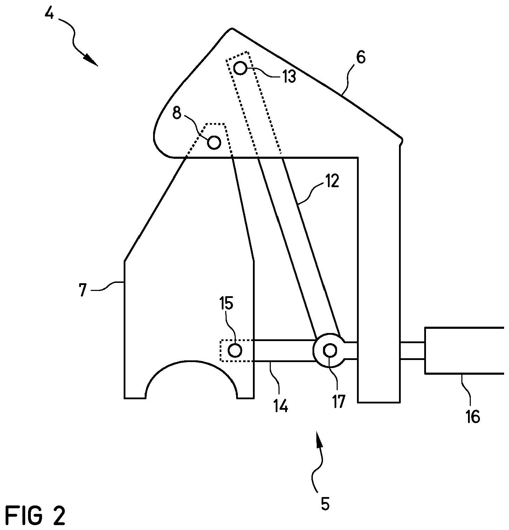

**Figur 2** zeigt ein Beispiel einer Verschwenkvorrichtung 4 mit einem Übersetzungsmechanismus 5. Der Übersetzungsmechanismus 5 ist dabei im Wesentlichen zwischen einem Kranarmteil 6 und einem über ein erstes Schwenklager 8 relativ zum Kranarmteil 6 verschwenkbar gelagerten Greifvorrichtungsteil 7 angeordnet.

Der Übersetzungsmechanismus 5 ist im vorliegenden Beispiel als Koppelgetriebe, insbesondere Vierpunktgetriebe, mit einer Basis bzw. einem Gestell, zwei Schwingen und einer Koppel ausgebildet. Die Basis wird dabei vom Kranarmteil 6 und eine der zwei Schwingen vom Greifvorrichtungsteil 7 gebildet. Die andere der zwei Schwingen wird von einem Hebelarm 12 gebildet, der über ein zweites Schwenklager 13 verschwenkbar am Kranarmteil 6 gelagert ist. Die Koppel wird von einem Übersetzungselement 14 gebildet, das über ein drittes Schwenklager 15 schwenkbar am Greifvorrichtungsteil 7 gelagert ist.

Der Übersetzungsmechanismus 5 ist mithilfe eines im vorliegenden Beispiel als Hydraulikzylinder ausgebildeten Betätigungselements 16 betätigbar, welches zumindest teilweise innerhalb des Kranarms angeordnet sein kann. Das Betätigungselement 16 ist über ein Verbindungslager 17 sowohl mit dem Hebelarm 12 als auch mit dem Übersetzungselement 14 verbunden.

Dabei ist der Übersetzungsmechanismus 5 vorzugsweise derart ausgebildet, insbesondere der Hebelarm 12 und/oder das zweite Schwenklager 13 derart angeordnet, dass eine vom Betätigungselement 16 auf den Übersetzungsmechanismus 5 ausgeübte Eingangs- oder Betätigungskraft im Wesentlichen oder zumindest überwiegend senkrecht zum Hebelarm 12 verläuft, und zwar über den gesamten Verschwenkbereich der Greifvorrichtung 3 bzw. des Greifvorrichtungsteils 7. Die vom Betätigungselement 16 ausgeübte Eingangskraft bewirkt somit eine Verschwenkung des Hebelarms 12 relativ zum Kranarmteil 6, wobei sich das Verbindungslager 17 auf einer Kreisbahn um das zweite Schwenklager 13 bewegt.

Des Weiteren ist der Übersetzungsmechanismus 5 vorzugsweise derart ausgebildet, insbesondere das Übersetzungselement 14 und/oder das dritte Schwenklager 15 derart angeordnet, dass die vom Betätigungselement 16 auf den Übersetzungsmechanismus 5 ausgeübte Eingangs- oder Betätigungskraft in der in Figur 2 gezeigten angewinkelten Lage der Greifvorrichtung 3 im Wesentlichen parallel zum Übersetzungselement 14 verläuft. Da das dritte Schwenklager 15 zusammen mit dem Greifvorrichtungsteil 7 selbst um das erste Schwenklager 8 schwenkbar ist, bewirkt die vom Betätigungselement 16 ausgeübte Eingangskraft somit im Wesentlichen oder zumindest überwiegend eine Translation des Übersetzungselements 14.

Wie in Figur 2 gezeigt ist der Abstand zwischen dem zweiten Schwenklager 13 und dem Verbindungslager 17 größer als der Abstand zwischen dem ersten Schwenklager 8 und dem dritten Schwenklager 15. Dadurch bewegt sich das dritte Schwenklager 15 bei einer Betätigung des Übersetzungsmechanismus 5 auf einer engeren Kreisbahn, d. h. auf einer Kreisbahn mit geringerem Radius, als das Verbindungslager 17. Dadurch stellt sich das Greifvorrichtungsteil 7 gegenüber dem Hebelarm 12 bei zunehmendem Verschwenken der Greifvorrichtung 3 aus der angewinkelten Lage auf. Somit kann ein anfängliches Verschwenken des Hebelarms 12 in ein überproportionales Verschwenken des Greifvorrichtungsteils 7 und damit der Greifvorrichtung 3 übersetzt werden. Mit zunehmender Aufstellung des Greifvorrichtungsteils 7 gegenüber dem Hebelarm 12 wird ein weiteres Verschwenken des Hebelarms 12 in ein unterproportionales Verschwenken des Greifvorrichtungsteils 7 übersetzt. Mit anderen Worten ergibt sich ein variables Übersetzungsverhältnis.

Ein überproportionales Verschwenken ist hierbei ein Verschwenken, bei dem ein Ausgangshub größer ist als ein Eingangshub. D. h. beim überproportionalen Verschwenken des Greifvorrichtungsteils 7 wird das Greifvorrichtungsteil 7 stärker, also um einen größeren Ausgangswinkel, verschwenkt als der Hebelarm 12. Das überproportionale Verschwenken kann deshalb auch als positive Übersetzung bezeichnet werden.

Entsprechend ist ein unterproportionales Verschwenken hierbei ein Verschwenken, bei dem der Ausgangshub kleiner ist als der Eingangshub. D. h., beim unterproportionalen Verschwenken des Greifvorrichtungsteils 7 wird das Greifvorrichtungsteil 7 weniger stark, also um einen kleineren Ausgangswinkel, verschwenkt als der Hebelarm 12. Das unterproportionale Verschwenken kann deshalb auch als negative Übersetzung bezeichnet werden.

Besonders vorteilhaft zum Verschwenken gegriffener Heu- oder Strohballen hat sich ein variables Übersetzungsverhältnis erwiesen, das sich bei einem Verhältnis des Abstands zwischen dem ersten und dritten Schwenklager 8, 15 zum Abstand zwischen dem zweiten Schwenklager 13 zum Verbindungslager 17 von im Wesentlichen 2/3 ergibt. Ein solches Abstandsverhältnis kann zum Beispiel realisiert werden, wenn der Abstand zwischen dem ersten und dritten Schwenklager 8, 15 etwa 197 mm und der Abstand zwischen dem zweiten Schwenklager 13 und dem Verbindungslager 17 etwa 304 mm beträgt.

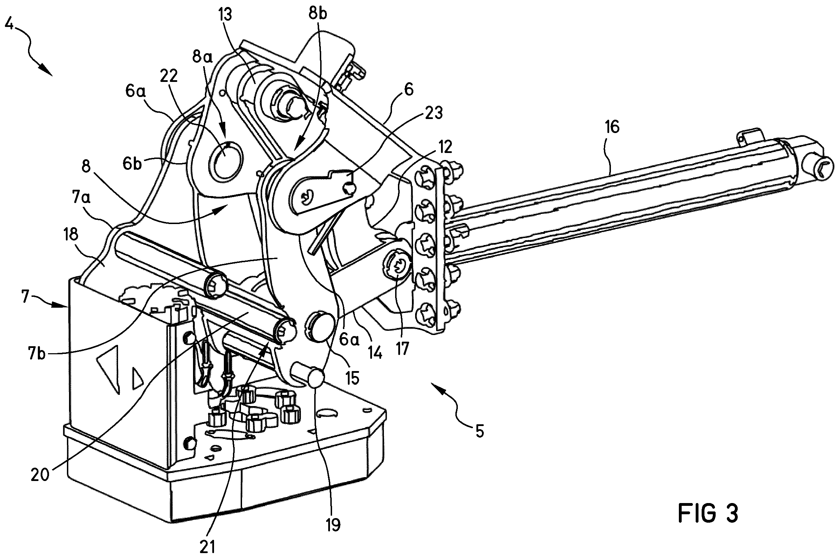

**Figur 3** zeigt die Verschwenkvorrichtung 4 aus Figur 1 aus einer anderen Perspektive in einer Detailansicht. Dabei ist ein Teil des Kranarmteils 6 und ein Teil des Greifvorrichtungsteils 7 weggebrochen, um einen besseren Blick auf den Übersetzungsmechanismus 5 zu erlauben. Zusätzlich ist ein Betätigungselement 16 in Form eines Hydraulikzylinders zu Betätigung des Übersetzungsmechanismus 5 dargestellt, welches zumindest teilweise im Kranarm (siehe Figur 1) angeordnet und daher in Figur 1 nicht sichtbar ist.

Der Übersetzungsmechanismus 5 ist im Wesentlichen zwischen dem Kranarmteil 6 und dem Greifvorrichtungsteil 7 angeordnet. Der Übersetzungsmechanismus 5 kann dabei zumindest abschnittsweise innerhalb des Kranarmteils 6 und des Greifvorrichtungsteils 7 angeordnet sein. Mit anderen Worten sind das Kranarmteil 6 und/oder das Greifvorrichtungsteil 7 derart ausgebildet, dass sie den Übersetzungsmechanismus 5 zumindest teilweise umschließen.

Analog zum in Figur 2 dargestellten Beispiel ist der in Figur 3 dargestellte Übersetzungsmechanismus 5 ebenfalls als Koppelgetriebe ausgebildet und weist eine Schwinge in Form eines Hebelarms 12 sowie eine Koppel in Form eines Übersetzungselements 14 auf. Eine weitere Schwinge 7b des Koppelgetriebes wird von einem Teil des Greifvorrichtungsteils 7 gebildet, während das Kranarmteil 6 eine Basis bzw. ein Gestell des Koppelgetriebes bildet. Das Kranarmteil 6 und das Greifvorrichtungsteil 7 sind über ein erstes Schwenklager 8 am Kranarmteil 6 relativ zu einander verschwenkbar gelagert. Der Hebelarm 12 ist über ein zweites Schwenklager 13 am Kranarmteil 6 und das Übersetzungselement 14 über ein drittes Schwenklager 15 am Greifvorrichtungsteil 7 verschwenkbar gelagert. Der Hebelarm 12 und das Übersetzungselement 14 sind über ein Verbindungslager 17 mit dem Betätigungselement 16 verbunden.

Wie im Zusammenhang mit Figur 1 schon ausgeführt, weist das Greifvorrichtungsteil 7 neben der Schwinge 7b auch das Gerüst 7a auf, welches über das erste Schwenklager 8 verschwenkbar mit der Schwinge 7b verbunden und im in Figur 1 und 3 gezeigten Beispiel an der Schwinge 7b durch den Bolzen 19 festgelegt ist. Dabei liegt eine Querstrebe 20 des Gerüsts 7a an einer konkaven Anschlagfläche 21 der Schwinge 7b an, oder ist sogar zumindest teilweise von der konkaven Anschlagfläche 21 aufgenommen. Wird der Bolzen 19 entfernt, kann das Gerüst 7a unabhängig von einer Betätigung des Übersetzungsmechanismus 5 relativ zum Kranarmteil 6 um das erste Schwenklager 8 verschwenkt werden, etwa durch die auf die Greifvorrichtung 3 wirkende Schwerkraft.

Wie in Figur 3 erkennbar, ist das Kranarmteil 6 zumindest abschnittsweise doppelwandig ausgebildet. Das Kranarmteil 6 weist insbesondere doppelwandige Seiten, nämlich auf jeder Seite eine äußere Seitenwand 6a und eine innere Seitenwand 6b, auf. Auf der dem Betrachter in Figur 3 zugewandten Seite ist die innere Seitenwand 6b weggebrochen.

Das erste Schwenklager 8 weist zwei Lagerteile 8a, 8b auf, die im Wesentlichen jeweils zwischen einer äußeren Seitenwand 6a und einer inneren Seitenwand 6b des Kranarmteils 6 angeordnet sind. Zwei Seitenwände 18 des Greifvorrichtungsteils 7 greifen dabei abschnittsweise in den Zwischenraum zwischen den äußeren Seitenwänden 6a und den inneren Seitenwänden 6b des Kranarmteils 6 ein. Dadurch kann der Hebelarm 12 bis in das Greifvorrichtungsteil 7, nämlich in den Zwischenraum zwischen den beiden Seitenwänden 18 des Greifvorrichtungsteils 7, einschwenken, ohne durch das erste Schwenklager 8 blockiert zu werden. Insbesondere kann der Hebelarm 12 bei einem Verschwenken so einen Winkelbereich überstreichen, durch den eine vom ersten Schwenklager 8 definierte Schwenkachse verläuft. Dies ermöglicht ein Verschwenken des Greifvorrichtungsteils 7 relativ zum Kranarmteil 6 um mehr als 90°, insbesondere mehr als 120°, beispielsweise um etwa 135°.

Die zwei Lagerteile 8a, 8b können dabei jeweils durch einen Lagerbolzen 22 aufweisen, der Bohrungen im Kranarmteil 6, in der Schwinge 7b und im Gerüst 7a durchgreift. Jeder der beiden Lagerbolzen 22 ist durch eine Verdrehsicherung 23, die auf der Außenseite der äußeren Seitenwand 6a des Kranarmteils 6 sein können, gegen ein Verdrehen gesichert.

### Bezugszeichenliste

- 1: Greifsystem
- 2: Kranarm
- 3: Greifvorrichtung
- 3a: Greifer
- 4: Verschwenkvorrichtung
- 5: Übersetzungsmechanismus
- 6: Kranarmteil
- 6a: äußere Seitenwand
- 6b: innere Seitenwand
- 7: Greifvorrichtungsteil
- 7a: Gerüst
- 7b: Schwinge
- 8: erstes Schwenklager
- 8a, 8b: Lagerteil
- 9: Gehäuse
- 10: Antrieb
- 11: Hydraulikkupplung
- 12: Hebelarm
- 13: zweites Schwenklager
- 14: Übersetzungselement
- 15: drittes Schwenklager
- 16: Betätigungselement
- 17: Verbindungslager
- 18: Seitenwand
- 19: Bolzen
- 20: Querstrebe
- 21: Anschlagfläche
- 22: Lagerbolzen
- 23: Verdrehsicherung

- G: Greifachse

## Patentansprüche

1. Verschwenkvorrichtung (4) für einen Kran, insbesondere Heukran, mit einem Kranarmteil (6), einem Greifvorrichtungsteil (7) und einer Verschwenkvorrichtung (4), mit welcher das Greifvorrichtungsteil (7) relativ zum Kranarmteil (6) verschwenkbar gelagert ist, wobei die Verschwenkvorrichtung (4) einen Übersetzungsmechanismus (5) zum Verschwenken des Greifvorrichtungsteils (7) relativ zum Kranarmteil (6) aufweist
**dadurch gekennzeichnet,**
**dass** das Greifvorrichtungsteil (7) eine Schwinge (7b) und ein relativ zur Schwinge (7b) verschwenkbar gelagertes Gerüst (7a) aufweist, das verschwenkfest mit einer Greifvorrichtung (3) verbindbar und an der Schwinge (7b) festlegbar ist.

2. Verschwenkvorrichtung (4) nach Anspruch 1,
**dadurch gekennzeichnet,**
**dass** der Übersetzungsmechanismus (5) ein variables Übersetzungsverhältnis aufweist.

3. Verschwenkvorrichtung (4) nach einem der Ansprüche 1 oder 2,
**dadurch gekennzeichnet,**
**dass** der Übersetzungsmechanismus (5) derart eingerichtet ist, dass sich eine durch den Übersetzungsmechanismus (5) auf das Greifvorrichtungsteil (7) ausgebübte Ausgangskraft relativ zu einer Eingangskraft zur Betätigung des Übersetzungsmechanismus (5) bei zunehmendem Verschwenken des Greifvorrichtungsteils (7) relativ zum Kranarmteil (6) vergrößert.

4. Verschwenkvorrichtung (4) nach einem der vorangehenden Ansprüche,
**dadurch gekennzeichnet,**
**dass** der Übersetzungsmechanismus (5) als Koppelgetriebe ausgebildet ist.

5. Verschwenkvorrichtung (4) nach einem der vorangehenden Ansprüche,
**dadurch gekennzeichnet,**
**dass** das Kranarmteil (6) an einem ersten Schwenklager (8) mit dem Greifvorrichtungsteil (7) verbunden ist, und der Übersetzungsmechanismus (5) einen Hebelarm (12) aufweist und dazu eingerichtet ist, eine auf den Hebelarm (12) wirkende Eingangskraft in eine von der Eingangskraft verschiedene, auf das Greifvorrichtungsteil (7) wirkende Ausgangskraft zu übersetzen.

6. Verschwenkvorrichtung (4) nach Anspruch 5,
**dadurch gekennzeichnet,**
**dass** der Übersetzungsmechanismus (5) zur Kopplung an ein Betätigungselement (16) zur Betätigung des Übersetzungsmechanismus (5) eingerichtet ist, so dass das Betätigungselement (16)
- über den am Kranarmteil (6) durch ein zweites Schwenklager (13) verschwenkbar gelagerten Hebelarm (12) mit dem Kranarmteil (6) verbunden ist und
- über ein am Greifvorrichtungsteil (7) durch ein drittes Schwenklager (15) verschwenkbar gelagertes Übersetzungselement (14) mit dem Greifvorrichtungsteil (7) verbunden ist.

7. Verschwenkvorrichtung (4) nach Anspruch 6,
**dadurch gekennzeichnet,**
**dass** der Hebelarm (12) und das Übersetzungselement (14) an einem Verbindungslager (17) zueinander verschwenkbar gelagert sind und der Übersetzungsmechanismus (5) am Verbindungslager (17) zur Kopplung an das Betätigungselement (16) eingerichtet ist.

8. Verschwenkvorrichtung (4) nach einem der Ansprüche 6 oder 7,
**dadurch gekennzeichnet,**
**dass** ein Abstand zwischen dem ersten und dritten Schwenklager (8, 15) kleiner ist als ein Abstand zwischen dem zweiten Schwenklager (13) und einem Verbindungslager (17) zur Verbindung von Betätigungselement (16) und Hebelarm (12).

9. Verschwenkvorrichtung (4) nach Anspruch 8,
**dadurch gekennzeichnet,**
**dass** ein Abstandsverhältnis des Abstands zwischen dem ersten und dritten Schwenklager (8, 15) zum Abstand zwischen dem zweiten Schwenklager (13) und dem Verbindungslager (17) im Wesentlichen 2/3 beträgt.

10. Verschwenkvorrichtung (4) nach einem der Ansprüche 6 bis 9, **dadurch gekennzeichnet,**
**dass** das erste Schwenklager (8) unterbrochen ausgebildet ist.

11. Verschwenkvorrichtung (4) nach einem der Ansprüche 6 bis 10,
**dadurch gekennzeichnet,**
**dass** das erste und zweite Schwenklager (8, 13) derart am Kranarmteil (6) angeordnet sind, dass mit dem Hebelarm (12) bei Betätigung des Übersetzungsmechanismus (5) ein Winkelbereich überstreichbar ist, durch den eine vom ersten Schwenklager (8) definierte Schwenkachse verläuft.

12. Verschwenkvorrichtung (4) nach einem der Ansprüche 5 bis 11,
**dadurch gekennzeichnet,**
**dass** das Kranarmteil (6) zumindest abschnittsweise doppelwandig ausgebildet ist und das erste Schwenklager (8) zwei Lagerteile (8a, 8b) aufweist, die jeweils zwischen einer äußeren Seitenwand (6a) und einer inneren Seitenwand (6b) des Kranarmteils (6) angeordnet sind.

13. Greifsystem (1) für einen Kran, insbesondere Heukran, mit einem Kranarm (2), einer Greifvorrichtung (3) und einer Verschwenkvorrichtung (4) gemäß einem der vorangehenden Ansprüche, wobei die Greifvorrichtung (3) mithilfe der Verschwenkvorrichtung (4) relativ zum Kranarm (2) verschwenkbar gelagert ist.

14. Kran, insbesondere Heukran, mit einem Greifsystem (1) nach Anspruch 13.

## Claims

1. Pivoting device (4) for a crane, in particular a hay crane, having a boom part (6), a gripping device part (7) and a pivoting device (4) by way of which the gripping device part (7) is mounted so as to be pivotable relative to the boom part (6), wherein the pivoting device (4) has a transmission mechanism (5) for pivoting the gripping device part (7) relative to the boom part (6), **characterized in that**
the gripping device part (7) has a swing arm (7b) and a frame (7a) which is mounted so as to be pivotable relative to the swing arm (7b), is connectable to a gripping device (3) so as to pivot conjointly with the latter, and is able to be fixed to the swing arm (7b).

2. Pivoting device (4) according to Claim 1, **characterized in that**
the transmission mechanism (5) has a variable gear ratio.

3. Pivoting device (4) according to one of Claims 1 or 2,
**characterized in that**
the transmission mechanism (5) is specified in such a manner that an output force, which is exerted on the gripping device part (7) by the transmission mechanism (5), increases relative to an input force for activating the transmission mechanism (5) as the gripping device part (7) is increasingly pivoted relative to the boom part (6).

4. Pivoting device (4) according to one of the preceding claims,
**characterized in that**
the transmission mechanism (5) is configured as a linkage.

5. Pivoting device (4) according to one of the preceding claims,
**characterized in that**
the boom part (6) is connected to the gripping device part (7) at a first pivot bearing (8), and the transmission mechanism (5) has a lever arm (12) and is configured to translate an input force acting on the lever arm (12) into an output force which is different from the input force and acts on the gripping device part (7) .

6. Pivoting device (4) according to Claim 5, **characterized in that**
the transmission mechanism (5) is configured to be coupled to an activation element (16) for activating the transmission mechanism (5) in such a way that the activation element (16)
- is connected to the boom part (6) by way of the lever arm (12) which is pivotably mounted on the boom part (6) by a second pivot bearing (13); and
- is connected to the gripping device part (7) by way of a transmission element (14) which is pivotably mounted on the gripping device part (7) by a third pivot bearing (15) .

7. Pivoting device (4) according to Claim 6, **characterized in that**
the lever arm (12) and the transmission element (14) are mounted on a connecting bearing (17) so as to be pivotable relative to one another, and the transmission mechanism (5) on the connecting bearing (17) is configured to be coupled to the activation element (16).

8. Pivoting device (4) according to one of Claims 6 or 7,
**characterized in that**
a spacing between the first and the third pivot bearing (8, 15) is smaller than a spacing between the second pivot bearing (13) and a connecting bearing (17) for connecting the activation element (16) and the lever arm (12) .

9. Pivoting device (4) according to Claim 8, **characterized in that**
a spacing ratio of the spacing between the first and the third pivot bearing (8, 15) to the spacing between the second pivot bearing (13) and the connecting bearing (17) is substantially 2/3.

10. Pivoting device (4) according to one of Claims 6 to 9,
**characterized in that**
the first pivot bearing (8) is configured to be interrupted.

11. Pivoting device (4) according to one of Claims 6 to 10,
**characterized in that**
the first and the second pivot bearing (8, 13) are disposed on the boom part (6) in such a manner that, when activating the transmission mechanism (5), an angular range through which runs a pivot axis defined by the first pivot bearing (8) is able to be swept by the lever arm (12).

12. Pivoting device (4) according to one of Claims 5 to 11,
**characterized in that**
the boom part (6) is at least in portions configured with a double wall, and the first pivot bearing (8) has two bearing parts (8a, 8b) which are in each case disposed between an outer lateral wall (6a) and an inner lateral wall (6b) of the boom part (6).

13. Gripping system (1) for a crane, in particular a hay crane, having a boom (2), a gripping device (3) and a pivoting device (4) according to one of the preceding claims, wherein the gripping device (3) is mounted so as to be pivotable relative to the boom (2) with the aid of the pivoting device (4).

14. Crane, in particular a hay crane, having a gripping system (1) according to Claim 13.

## Revendications

1. Dispositif de pivotement (4) destiné à une grue, en particulier une grue à foin, comprenant une partie formant bras de grue (6), une partie formant dispositif de préhension (7) et un dispositif de pivotement (4) qui permet de monter la partie formant dispositif de préhension (7) de manière pivotante par rapport à la partie formant bras de grue (6),
le dispositif de pivotement (4) comportant un mécanisme de transformation (5) destiné à faire pivoter la partie formant dispositif de préhension (7) par rapport à la partie formant bras de grue (6),
**caractérisé en ce que**
la partie formant dispositif de préhension (7) comporte une bascule (7b) et un cadre (7a) qui est monté de manière pivotante par rapport à la bascule (7b), qui peut être relié sans pouvoir pivoter à un dispositif de préhension (3) et qui peut être fixé à la bascule (7b).

2. Dispositif de pivotement (4) selon la revendication 1,
**caractérisé en ce que**
le mécanisme de transformation (5) a un rapport de transformation variable.

3. Dispositif de pivotement (4) selon l'une des revendications 1 ou 2,
**caractérisé en ce que**
le mécanisme de transformation (5) est conçu de telle sorte qu'une force de sortie, exercée par le mécanisme de transformation (5) sur la partie formant dispositif de préhension (7), augmente relativement à une force d'entrée destinée à actionner le mécanisme de transformation (5) à mesure que le pivotement de la partie formant dispositif de préhension (7) augmente par rapport à la partie formant bras de grue (6).

4. Dispositif de pivotement (4) selon l'une des revendications précédentes,
**caractérisé en ce que**
le mécanisme de transformation (5) est conçu comme une transmission d'accouplement.

5. Dispositif de pivotement (4) selon l'une des revendications précédentes,
**caractérisé en ce que**
la partie formant bras de grue (6) est reliée à la partie formant dispositif de préhension (7) au niveau d'un premier palier de pivotement (8), et le mécanisme de transformation (5) comporte un bras de levier (12) et est conçu pour transformer la force d'entrée agissant sur le bras de levier (12) en une force de sortie, différente de la force d'entrée, qui agit sur la partie formant dispositif de préhension (7).

6. Dispositif de pivotement (4) selon la revendication 5, **caractérisé en ce que** le mécanisme de transformation (5) est conçu pour s'accoupler à un élément d'actionnement (16) afin d'actionner le mécanisme de transformation (5) de sorte que l'élément d'actionnement (16)
- soit relié à la partie formant bras de grue (6) par le biais du bras de levier (12) qui est monté de manière pivotante sur la partie formant bras de grue (6) par le biais d'un deuxième palier de pivotement (13), et
- soit relié à la partie formant dispositif de préhension (7) par le biais d'un élément de transformation (14) qui est monté de manière pivotante sur la partie formant dispositif de préhension (7) par le biais d'un troisième palier de pivotement (15).

7. Dispositif de pivotement (4) selon la revendication 6,
**caractérisé en ce que**
le bras de levier (12) et l'élément de transformation (14) sont montés de manière pivotante l'un par rapport à l'autre sur un palier de liaison (17) et le mécanisme de transformation (5) sur le palier de liaison (17) est conçu pour s'accoupler à l'élément d'actionnement (16) .

8. Dispositif de pivotement (4) selon l'une des revendications 6 ou 7,
**caractérisé en ce que**
la distance entre les premier et troisième paliers de pivotement (8, 15) est inférieure à la distance entre le deuxième palier de pivotement (13) et un palier de liaison (17) destiné à relier l'élément d'actionnement (16) et le bras de levier (12).

9. Dispositif de pivotement (4) selon la revendication 8,
**caractérisé en ce que**
le rapport de distances entre la distance entre les premier et troisième paliers de pivotement (8, 15) et la distance entre le deuxième palier de pivotement (13) et le palier de liaison (17) est sensiblement de 2/3.

10. Dispositif de pivotement (4) selon l'une des revendications 6 à 9,
**caractérisé en ce que**
le premier palier de pivotement (8) est conçu pour être interrompu.

11. Dispositif de pivotement (4) selon l'une des revendications 6 à 10,
**caractérisé en ce que**
les premier et deuxième paliers de pivotement (8, 13) sont disposés sur la partie formant bras de grue (6) de manière à ce que le bras de levier (12) puisse couvrir, lorsque le mécanisme de transformation (5) est actionné, une plage angulaire traversée par un axe de pivotement défini par le premier palier de pivotement (8) .

12. Dispositif de pivotement (4) selon l'une des revendications 5 à 11,
**caractérisé en ce que**
la partie formant bras de grue (6) est conçue au moins par portions à double paroi et le premier palier de pivotement (8) comporte deux parties de palier (8a, 8b) qui sont chacune disposées entre une paroi latérale extérieure (6a) et une paroi latérale intérieure (6b) de la partie formant bras de grue (6).

13. Système de préhension (1) destiné à une grue, notamment une grue à foin, comprenant un bras de grue (2), un dispositif de préhension (3) et un dispositif de pivotement (4) selon l'une des revendications précédentes, le dispositif de préhension (3) étant monté de manière pivotante par rapport au bras de grue (2) à l'aide du dispositif de pivotement (4).

14. Grue, notamment grue à foin, comprenant un système de préhension (1) selon la revendication 13.
